## Europäisches Patentamt
## European Patent Office
## Office européen des brevets

(11) Veröffentlichungsnummer: **0 142 534**
**B1**

(12) ## EUROPÄISCHE PATENTSCHRIFT

(45) Veröffentlichungstag der Patentschrift:
**08.10.86**

(51) Int. Cl.⁴: **B 60 R 25/10**

(21) Anmeldenummer: **84901969.0**

(22) Anmeldetag: **11.05.84**

(86) Internationale Anmeldenummer:
**PCT/DE 84/00106**

(87) Internationale Veröffentlichungsnummer:
**WO 84/04502 (22.11.84 Gazette 84/27)**

(54) VERFAHREN ZUM ÜBERWACHEN DER NEIGUNG EINES KRAFTFAHRZEUGES.

(30) Priorität: **17.05.83 DE 3318275**

(43) Veröffentlichungstag der Anmeldung:
**29.05.85 Patentblatt 85/22**

(45) Bekanntmachung des Hinweises auf die Patenterteilung:
**08.10.86 Patentblatt 86/41**

(84) Benannte Vertragsstaaten:
**AT BE CH DE FR GB LI LU NL SE**

(56) Entgegenhaltungen:
**DE - A - 3 203 277**
**FR - A - 2 494 649**
**US - A - 4 359 717**

(73) Patentinhaber: **F & G MEGAMOS SICHERHEITSELEKTRONIK GMBH, Wihlpuhl 4, D-5250 Engelskirchen (DE)**

(72) Erfinder: **KOLB, Hans, An der Aussicht 29, D-5270 Gummersbach-Hülsenbusch (DE)**

(74) Vertreter: **Berkenfeld, Helmut, Dipl.-Ing., An der Schanz 2, D-5000 Köln 60 (DE)**

ACTORUM AG

## Beschreibung

Die Erfindung betrifft ein Verfahren zum Überwachen der Neigung eines Kraftfahrzeuges mit Messen dieser Neigung mit einem neigungsempfindlichen Sensor, mit Erzeugen von digitalen Signalen durch den Sensor, mit Mitteln dieser Signale während eines vorgegebenen Zeitraumes zur Bildung eines Messwertes, mit Vergleichen der Messwerte mit einem Referenzwert und Auslösen eines Alarmes bei Abweichen der Messwerte von dem Referenzwert um mehr als einen vorgegebenen Toleranzwert.

Verfahren zum Schutz von Kraftfahrzeugen, die auf der Grundlage einer Überwachung von deren Neigung arbeiten, sind bekannt. Mit ihnen soll einerseits das Kraftfahrzeug selbst vor einem Diebstahl durch Verladen auf ein anderes Fahrzeug unter Hochziehen über eine Rampe geschützt und andererseits soll auch verhindert werden, dass das Kraftfahrzeug zum Abmontieren und Stehlen eines Rades mit einer Winde angehoben wird. Bei allen diesen Manipulationen bewegt sich die Karosserie gegenüber dem Fahrgestell bzw. die gefederten gegenüber den ungefederten Teilen. Bei diesen Bewegungen kann es sich um Stösse, ruckartige Bewegungen oder auch um ein Anheben mit einem Wagenheber handeln. In sämtlichen Fällen ändert die Karosserie ihre Neigung gegenüber einem Ausgangszustand. Eine Neigungsänderung kann daher zum Auslösen eines Alarms herangezogen werden.

Der unmittelbare Anschluss einer akustischen und/oder optischen Alarmsignalquelle an einen die Neigung feststellenden Messwertgeber oder Sensor würde jedoch zu einer grossen Anzahl von Fehlalarmen führen. Es kann vorkommen, dass das Fahrzeug durch Erschütterungen, spielende Kinder usw. nur kurzzeitig angestossen wird. Es verändert seine Neigung. Nach einem Zeitraum in der Grössenordnung von vielleicht nur einer halben Sekunde erreicht es wieder eine stabile Endlage. Ebenso kann es vorkommen, dass das Fahrzeug zum Beispiel unter dem Einfluss der Witterung oder der Aussentemperatur langfristig seine Neigung ändert. Eine auf seinem Dach liegende Schneedecke kann einseitig abschmelzen. Bei Aufstehen auf einem weichen Untergrund kann es einseitig einsinken. Ebenso kann es vorkommen, dass das Fahrzeug durch Erschütterungen oder einen Stoss zu Schwingungen mit seiner Eigenfrequenz angeregt wird. Diese halten wenige Perioden an und klingen dann ab. Das Fahrzeug wird auch dann mit seiner Eigenfrequenz schwingen und dabei seine Neigung ändern, wenn es zum Beispiel von Kindern bewusst in seiner Federung geschaukelt wird. Es wäre ein Fehlalarm und hätte zur Folge, dass der Benutzer die Alarmanlage nach einigen Fehlalarmen ausschalten würde.

Bekannt ist das Verfahren der eingangs genannten Gattung (US-A-4 359 717), bei dem aus den von dem Sensor abgegebenen Signalen ein Mittelwert gebildet und dieser als Messwert zum Auslösen eines Alarmes herangezogen wird. Damit wird vermieden, dass ein Alarm schon bei einer ganz kurzzeitigen Änderung der Neigung des Kraftfahrzeuges ausgelöst wird. Aber auch dieses bekannte Verfahren leidet unter der Schwierigkeit der richtigen Einstellung seiner Empfindlichkeit. Bei zu hoher Empfindlichkeit werden Fehlalarme ausgelöst. Bei zu geringer Empfindlichkeit dagegen werden notwendige Alarme unterdrückt. Unter Empfindlichkeit ist hierbei diejenige Abweisung von dem Referenzwert zu verstehen, bei der ein Alarm ausgelöst wird. Dieser Wert ist bei einem Kraftfahrzeug nicht konstant. An verschiedenen Orten, an denen es abgestellt oder geparkt wird, kann es eine andere Neigung einnehmen. Wie eingangs geschildert wurde, kann es auch im geparkten Zustand seine Neigung verändern. Die Vorgabe eines konstanten Referenzwertes zum Beispiel entsprechend einer horizontalen Parkfläche würde daher den tatsächlichen Verhältnissen nicht gerecht. Abhängig von der weiter einzustellenden Empfindlichkeit würde er zu Fehlalarmen oder dem Unterdrücken von notwendigen Alarmen führen. Hiervon ausgehend stellt sich für die vorliegende Erfindung die Aufgabe, ein Alarmverfahren der eingangs genannten Gattung so auszubilden, dass trotz Erreichen einer maximal möglichen Empfindlichkeit Fehlalarme ausgeschaltet werden. Die Lösung dieser Aufgabe ergibt sich nach der Erfindung bei einem Verfahren der eingangs genannten Gattung dadurch, dass die Messwerte mehrere Male während mit Abständen aufeinanderfolgender Zeitabschnitte gemittelt werden und der Mittelwert als Referenzwert abgespeichert wird, und die dann einlaufenden Messwerte während eines vorgegebenen Zeitraumes mit diesem abgespeicherten Referenzwert verglichen werden. Das erfindungsgemässe Verfahren arbeitet somit nicht mit einem konstanten Referenzwert. Nach jedem Abparken des Fahrzeuges und erneutem Anlauf des Verfahrens wird ein Referenzwert entsprechend der dann herrschenden Neigung neu eingestellt. Um diesen Referenzwert wird gedanklich ein Toleranzfenster gebildet. Falls die nach der Referenzwertbildung einlaufenden Messwerte im Toleranzfenster liegen, wird ein Alarm unterdrückt. Falls sie ausserhalb des Toleranzfensters liegen, wird der Alarm ausgelöst.

Das erfindungsgemässe Verfahren arbeitet digital und mit logischen Elementen. Die von dem Sensor abgegebenen digitalen Signale sind ein Mass für die Neigung. In einer zweckmässigen Ausführungsform empfiehlt sich dabei, dass die veränderlichen digitalen Signale nach Massgabe der Neigung einen unterschiedlichen zeitlichen Abstand aufweisen.

Wie erläutert wurde, kann es vorkommen, dass das Kraftfahrzeug während eines Zeitraumes von zum Beispiel einer halben Stunde oder mehr langsam seine Neigung verändert. Dies geht auf die Sicherheit des Fahrzeuges nicht gefährdende Einflüsse zurück. Ein in diesem Fall bei konstant bleibendem Referenzwert ausgelöster Alarm wäre somit ein Fehlalarm. Zur Vermeidung solcher Fehlalarme sieht die Erfindung vor, dass jeder gebildete Messwert abgespeichert wird, jeder gespeicherte Messwert mit dem zuvor gespeicherten unter Feststellung der Richtung einer Abweichung verglichen und die Vorzeichen der festgestellten Abweichungen getrennt nach positiven und negativen Werten aufsummiert werden, die aufsummierten positiven und negativen Werte miteinander verglichen, die Differenz gebildet und ein neuer Referenzwert nur dann gebildet und abgespeichert wird, wenn diese Differenz einen Mindestwert übersteigt.

Das langsame Auswandern des Fahrzeuges aus einer Ursprungsneigung kann man als Driften bezeichnen. Sobald das Abdriften einen bestimmten Betrag erreicht hat, muss der Referenzwert neu gebildet werden. Dieser Betrag entspricht dem eben genannten vorgegebenen Betrag. Er bestimmt die Grösse eines sogenannten Driftfensters, das um den Referenzwert herumgelegt wird. Solange die einlaufenden Signale im Driftfenster liegen, geschieht nichts. Sobald sie ausserhalb des Driftfensters liegen und sich während einer vorgegebenen Zeitspanne eine bestimmte Anzahl von Malen wiederholen, wird der Referenzwert neu gebildet.

Diese Definition des Driftfensters lässt sich auch wie folgt beschreiben: Die Anzahl der Messungen, bei denen der aktuelle Messwert über dem vorherigen lag, wird aufsummiert zur Summe $S_1$. Ebenso wird die Anzahl derjenigen Messungen, die einen Messwert ergaben, der unterhalb des jeweils vorangegangenen Messwertes lag, aufsummiert zur Summe $S_0$. Ein neuer Referenzwert soll grundsätzlich nur dann gebildet werden, wenn der aktuelle Messwert um den oben genannten Betrag vom abgespeicherten Referenzwert abweicht, und wenn gleichzeitig der Betrag der Differenz der beiden Summen $S_0$ und $S_1$, also $S_0 - S_1$ eine vorgebbare Zahl, den Mindestwert, überschreitet.

Alle möglichen Störeffekte, die zu einer nicht gewollten Abweichung des Messwertes vom abgespeicherten Referenzwert führen und damit möglicherweise Fehlalarme verursachen könnten, zeichnen sich durch ein solches Wegdriften des Messwertes aus. Das heisst, die jeweiligen Messwerte unterliegen in ihrer Folge einer zunehmenden Abweichung vom Referenzwert. Tritt dieser Fall ein, so werden die fortlaufend gemessenen Werte überwiegend in einer einzigen Richtung von den vorangehend gemessenen Werten abweichen. Dies führt zu einem schnellen Anwachsen der Differenz des $S_0 - S_1$, die dann nach Überschreiten des festgesetzten Mindestwertes die Bildung eines neuen Referenzwertes freigibt.

Es wurde bereits angedeutet, dass das Fahrzeug durch Erschütterungen, zum Beispiel infolge von vorbeifahrenden schweren Fahrzeugen oder auch mutwillig durch Kinder in Schwingungen versetzt werden kann. Diese Schwingungen führen zu Neigungsänderungen und würden damit einen Alarm auslösen. Ein solcher Alarm wäre ein Fehlalarm. Infolge seiner verhältnismässig grossen Masse werden aus den eben genannten Gründen ausgelöste Schwingungen mit der Eigenfrequenz des Fahrzeuges erfolgen. Dies ist bekannt. Die mit der Eigenfrequenz erfolgenden Schwingungen lassen sich damit einfach erkennen. Entsprechend lassen sich durch sie ausgelöste Alarme unterdrücken. Im einzelnen ist hierzu vorgesehen, dass bei Auftreten eines einen vorgegebenen positiven Mindestwert übersteigenden Messwertes geprüft wird, ob ein innerhalb einer vorgegebenen Zeitspanne auftretender Messwert einen gleichen negativen Mindestwert übersteigt und mindestens ein weiterer Messwert zwischen den beiden ersten Messwerten liegt, dass bei Feststellen dieser Messwertfolge die Prüfung während eines vorgegebenen Zeitraumes wiederholt und bei Auftreten der gleichen Messwertfolge das Auslösen eines Alarmes unterdrückt wird. Die vorgegebene Zeitspanne entspricht mindestens einer Halbperiode der Eigenfrequenz. Erfindungsgemäss wird damit festgestellt, ob entsprechend der Eigenfrequenz zeitlich auseinanderliegende Signale periodischen Änderungen des Messwertes unterliegen und damit eine Schwingung des Fahrzeuges vorliegt. In diesem Fall wird ein Alarm unterdrückt. Diese Prüfung der Signalfolge wird so lange wiederholt, bis das Fahrzeug aufgrund der bekannten Dämpfung seiner Federung wieder eine Ruhelage eingenommen haben müsste. Man kann von einem Schwingungsfenster sprechen. Dieses Schwingungsfenster wird so ausgewählt, dass seine Grenzen innerhalb des für die Alarmauslösung massgebenden Toleranzfensters liegen. Damit führen im Schwingungsfenster liegende Messwerte im stationären Fall nicht zum Auslösen eines Alarms.

Im einzelnen hat es sich hierbei als zweckmässig herausgestellt, dass nach einem Wegfall der Messwertfolge überprüft wird, ob der folgende Messwert um mehr als den vorgegebenen Toleranzwert vom Referenzwert abliegt und in diesem Fall ein Alarm ausgelöst wird.

In einer weiteren zweckmässigen Ausgestaltung ist vorgesehen, dass der Referenzwert nach jedem Auslösen eines Alarmes neu gebildet wird.

Zweckmässig unterliegen die digitalen Signale der Impulsbreitenmodulation.

An dem folgenden Ausführungsbeispiel wird die Erfindung näher erläutert. Zur Erläuterung dienen auch zwei Figuren. Diese bedeuten:

Fig. 1 ist die schematische Darstellung des Toleranzfensters und

Fig. 2 ist die schematische Darstellung des Schwingungs-, Drift- und Toleranzfensters.

An dem folgenden Ausführungsbeispiel wird die Erfindung näher erläutert.

*Der Sensor*

Als Sensor oder Messwertgeber wird ein Plattenkondensator verwendet, dessen eines Plattenpaket fest mit einer Grundplatte oder einem Gehäuse verbunden ist, dessen zweites Plattenpaket sehr leicht drehbar gelagert und so ausgestaltet ist, dass sein Schwerpunkt, der nicht in die Drehachse fällt, im stationären Fall immer senkrecht unter die Drechachse zu liegen kommt. Wird nun die Grundplatte oder das Gehäuse des Kondensators fest mit einem Fahrzeug verbunden, so bewirkt diese Ausführung bei günstiger Anordnung und geometrischer Ausführungsform des drehbaren Plattenpakets, dass sich die Kapazität des Kondensators in etwa proportional zur Neigung seiner Grundplatte, gemessen in einer Richtung senkrecht zur Drehachse, ändert.

Dieser Kondensator dient als frequenzbestimmendes Glied eines RC-Oszillators, dessen aktiver Teil mit invertierenden CMOS-Gattern aufgebaut ist. Aufgrund der extrem hochohmigen Eingänge und der daraus resultierenden äusserst geringen Eingangsströme dieser CMOS-Gatter ist es möglich, den Ohm'schen Widerstand, dessen Grösse die Oszillatorfrequenz mitbestimmt, so hoch zu wählen, dass bei insgesamt sehr geringem fliessenden Strom hohe Oszillationsfrequenzen erzeugt werden.

*Allgemeine Funktion*

Gemäss dem Verfahren wird die Neigung eines abgestellten Fahrzeuges ständig gemessen und überprüft. Treten Neigungsänderungen in einem Mass auf, das über ein vorgegebenes Toleranzfenster hinausgeht, ergibt sich elektrisches Signal, mit dem eine Alarmeinrichtung im Fahrzeug angestossen werden kann.

*Bildung des Referenzwertes und Toleranzfensters*

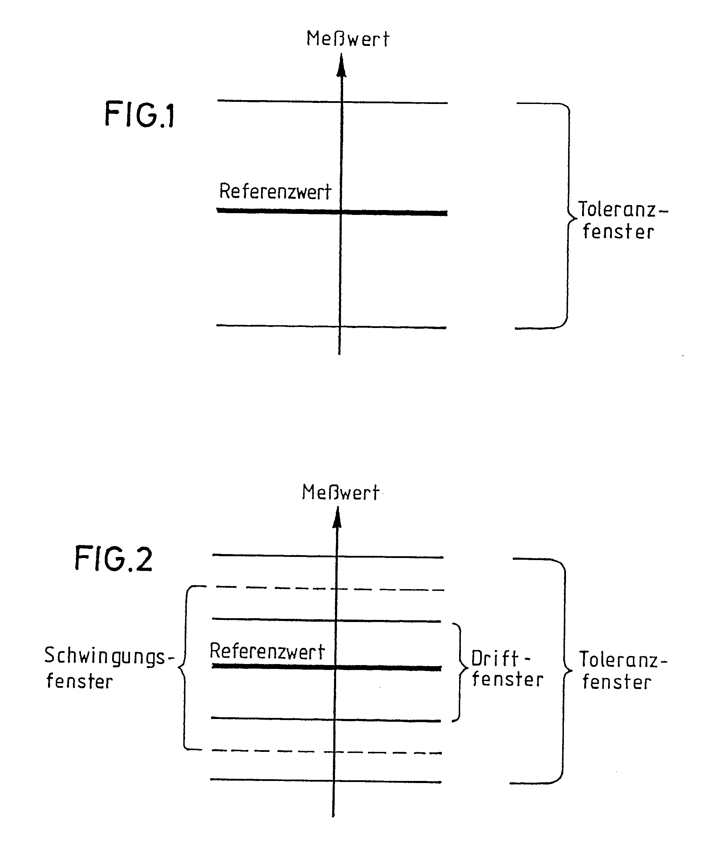

Beim Abstellen des Fahrzeuges wird das Verfahren in Gang gesetzt und hierzu auch der Oszillator gestartet. Die dann gemessene Frequenz (Neigung) wird als Referenzwert in digitalisierter Form abgespeichert. Alle folgenden gemessenen Frequenzwerte werden mit diesem Referenzwert verglichen. Liegen sie innerhalb eines vorgebbaren Toleranzfensters um den Referenzwert, erfolgt jeweils in bestimmten Zeitabständen eine neue Messung. Erst wenn mehrere, in ihrer Anzahl festlegbare, aufeinanderfolgend gemessene Werte nach oben oder nach unten aus dem Toleranzfenster herausfallen, wird dies als Abweichung angesehen und ein Alarm ausgelöst (vgl. Fig. 1).

*Bildung des Driftfensters*

Infolge von Änderungen der Temperatur, ungleichmässigem Bilden oder Abschmelzen einer Schneedecke auf dem Wagendach oder aus anderen Gründen kann sich die Neigung des Fahrzeuges langsam ändern. Zum Unterdrücken von sich hieraus ergebenden Fehlalarmen wird ein Driftfenster gebildet.

Jeder Messwert wird unabhängig vom gesetzten Toleranzfenster mit dem vorangegangenen verglichen. Eine Auswerteeinrichtung stellt fest, ob er grösser oder kleiner als dieser war. Dies bedingt eine Speicherung jedes Messwertes, nicht des Referenzwertes, mindestens für einen Zeitabschnitt, bis zu dessen Ende der nächstfolgende Messwert vorliegt und dieser Vergleich durchgeführt werden konnte. Liegt der neue Messwert oberhalb des alten, wird der Zählerstand eines «Driftzählers oben» um Eins erhöht, der eines «Driftzählers unten» um Eins erniedrigt. Liegt der neue Messwert unterhalb des alten, wird der Zählerstand des «Driftzählers unten» um Eins erhöht, der des «Driftzählers oben» um Eins erniedrigt. Durch die Auswertevorrichtung wird dafür gesorgt, dass die Zählerstände nicht unter Null absinken und nicht über einen Höchststand, der aber sehr hoch sein kann, hinausgehen können.

Innerhalb des bereits erwähnten Toleranzfensters wird dadurch das Driftfenster (siehe Fig. 2), das in seiner Breite ebenfalls vorgebbar ist, gebildet.

Liegt nun der gemessene Neigungswert in mindestens einer vorgebbaren Anzahl von zeitlich aufeinanderfolgenden Messungen zum Beispiel oberhalb des Driftfensters, prüft die Auswerteeinrichtung den Zählerstand des «Driftzählers oben». Übersteigt dieser Zählerstand einen vorgebbaren Wert, bedeutet dies, dass in der zurückliegenden Zeitspanne sehr oft der Fall eingetreten war, dass Messwerte über den vorangegangenen lagen und somit der Messwert einer langsamen Aufwärtsdrift unterlag. Dann wird der letzte Messert als neuer Referenzwert übernommen und Toleranz- und Driftfenster nun auf diesen neuen Messwert bezogen. Der vorgegebene Mindestwert für den Zählerstand des Driftzählers bei Durchführung des Vergleichs muss so hoch gewählt werden, dass bei einer langsamen Lageveränderung des Fahrzeuges von aussen dieser Zählerstand nicht erreicht werden kann und eine Alarmauslösung sicher erfolgt.

Entsprechendes gilt für den Fall, dass ein gemessener Neigungswert in einer vorgebbaren Anzahl von zeitlich aufeinanderfolgenden Messungen unterhalb des Driftfensters liegt.

*Bildung des Schwingungsfensters*

Einfache Verfahren führen dann zu Fehlalarmen, wenn das Fahrzeug von aussen aufgeschaukelt wird und sich seine Neigung damit periodisch bis zu einem Betrag erhöht, der bei einem unbefugten Abschleppen oder dergleichen erreicht wird. Wie ausgeführt wurde, erfolgen solche Schwingungen immer mit der Eigenfrequenz der Fahrzeugkarosserie. Es ist nicht möglich, dieser von aussen eine bestimmte Schwingungsfrequenz aufzudrücken. Mögliche Schwingungen erfolgen also stets mit etwa konstanter Periodendauer.

Innerhalb des Toleranzfensters liegt ein drittes Fenster, das sogenannte Schwingungsfenster, das auch mit dem zweiten, dem Driftfenster, zusammenfallen kann. Liegt nun ein Messwert oberhalb des Schwingungsfensters, so stellt die Auswerteeinrichtung fest, ob innerhalb eines in seiner Dauer festgelegten Zeitraumes $t_1$ insgesamt mindestens ein Messwert innerhalb des Schwinungsfensters und zeitlich danach mindestens einer unterhalb des Fensters liegt. Ist dies der Fall, so wird eine festgelegte Anzahl N folgender Messwerte nur noch auf ihr alternierendes Verhalten bezüglich des Schwingungsfensters jeweils in Zeiträumen $t_1$ überwacht. Wird zu einem Zeitpunkt, zu dem die Zahl N noch nicht erreicht ist, erneut das alternierende Verhalten der in einem Zeitraum $t_1$ entsprechend dem vorgenannten erfassten Messwert von der Auswerteeinrichtung festgestellt, so wird erneut eine Anzahl von N Messwerten vorgegeben, die ausschliesslich auf ihr alternierendes Verhalten überwacht werden. Auch wenn in diesem Zeitraum Messwerte ausserhalb des Toleranz-

fensters anfallen, führt dies nicht zu einer Auslösung von Alarm. Sämtliche drei Bedingungen müssen innerhalb des Zeitabschnittes der Dauer $t_1$ erfüllt sein.

Fallen keine alternierenden Messwerte mehr an, bedeutet dies, dass die Schaukelbewegungen des Fahrzeuges aufgehört haben. Die Auswerteeinrichtung vergleicht nun den aktuellen Messwert mit dem Referenzwert vor Erkennen der Schaukelbewegung. Fällt dieser Messwert für eine festgelegte Anzahl aufeinanderfolgender Messungen aus dem Toleranzfenster heraus, so wird Alarm ausgelöst. Ist dies nicht der Fall, wird ein neuer Mittelwert gebildet und dieser als Referenzwert abgespeichert.

Der Zeitraum $t_1$ muss dabei grösser als die halbe Periodendauer der Eigenschwingung der Karosserie gegen das Fahrgestell gewählt werden.

Nach jeder Alarmauslösung erfolgt ein Neusetzen des Referenzwertes. Damit wird erreicht, dass nach dem Anheben eines Fahrzeuges und dabei erfolgter Alarmauslösung auch beim Ablassen des Fahrzeuges erneut Alarm ausgelöst wird.

## Patentansprüche

1. Verfahren zum Überwachen der Neigung eines Kraftfahrzeuges mit Messen dieser Neigung mit einem neigungsempfindlichen Sensor, mit Erzeugen von digitalen Signalen durch den Sensor, mit Mitteln dieser Signale während eines vorgegebenen Zeitraumes zur Bildung eines Messwertes, mit Vergleichen der Messwerte mit einem Referenzwert und Auslösen eines Alarmes bei Abweichen der Messwerte von dem Referenzwert um mehr als einen vorgegebenen Toleranzwert, dadurch gekennzeichnet, dass die Messwerte mehrere Male während mit Abständen aufeinandefolgender Zeitabschnitte gemittelt werden und der Mittelwert als Referenzwert abgespeichert wird und die dann einlaufenden Messwerte während eines vorgegebenen Zeitraumes mit diesem abgespeicherten Referenzwert verglichen werden.

2. Verfahren nach Anspruch 1, dadurch gekennnzeichnet, dass die veränderlichen digitalen Signale nach Massgabe der Neigung einen unterschiedlichen zeitlichen Abstand aufweisen.

3. Verfahren nach Anspruch 1, dadurch gekennzeichnet, dass jeder gebildete Messwert abgespeichert wird, jeder gespeicherte Messwert mit dem zuvor gespeicherten unter Feststellung der Richtung einer Abweichung verglichen und die Vorzeichen der festgestellten Abweichungen getrennt nach positiven und negativen Werten aufsummiert werden, die aufsummierten positiven und negativen Werte miteinander verglichen, die Differenz gebildet und ein neuer Referenzwert nur dann gebildet und abgespeichert wird, wenn diese Differenz einen Mindestwert übersteigt.

4. Verfahren nach Anspruch 1, dadurch gekennzeichnet, dass bei Auftreten eines einen vorgegebenen positiven Mindestwert übersteigenden Messwertes geprüft wird, ob ein innerhalb einer vorgegebenen Zeitspanne auftretender Messwert einen gleichen negativen Mindestwert übersteigt und mindestens ein weiterer Messwert zwischen den beiden ersten Messwerten liegt, dass bei Feststellen dieser Messwertfolge die Prüfung während eines vorgegebenen Zeitraumes wiederholt und bei Auftreten der gleichen Messwertfolge das Auslösen eines Alarmes unterdrückt wird.

5. Verfahren nach Anspruch 1 und 4, dadurch gekennzeichnet, dass nach einem Wegfall der Messwertfolge überprüft wird, ob der folgende Messwert um mehr als den vorgegebenen Toleranzwert vom Referenzwert abliegt und in diesem Fall ein Alarm ausgelöst wird.

6. Verfahren nach Anspruch 1 bis 5, dadurch gekennzeichnet, dass der Referenzwert nach jedem Auslösen eines Alarmes neu gebildet wird.

7. Verfahren nach Anspruch 2, dadurch gekennzeichnet, dass die digitalen Signale der Impulsbreitenmodulation unterliegen.

## Claims

1. A method of monitoring the inclination of a motor vehicle comprising measuring said inclination with an inclination-sensitive sensor, producing digital signals by the sensor, averaging said signals during a predetermined period of time to form a measurement value, comparing the measurement values to a reference value and triggering off an alarm when the measurement values deviate from the reference value by more than a predetermined tolerance value, characterised in that the measurement values are averaged a plurality of times during periods of time which follow each other with intervals therebetween, and the average is stored as reference value and the then incoming measurement values are compared during a predetermined period of time to said stored reference value.

2. A method according to claim 1 characterised in that the variable digital signals have different time spacings, in accordance with the inclination.

3. A method according to claim 1 characterised in that each measurement value formed is stored, each stored measurement value is compared to the previously stored measurement value, with the direction of a deviation being detected, and the signs of the detected deviations are totalled separately in accordance with positive and negative values, the totalled positive and negative values are compared together, the difference is formed and a new reference value is formed and stored only when said difference exceeds a minimum value.

4. A method according to claim 1 characterised in that, upon the occurrence of a measurement value which exceeds a predetermined positive minimum value, a check is made to ascertain whether a measurement value which occurs within a predetermined period of time exceeds an equal negative value and at least one further measurement value lies between the first two measurement values, that when said measurement value sequence is detected, the checking operation is repeated during a predetermined period of time and, when the same measurement value sequence occurs, triggering of an alarm is suppressed.

5. A method according to claim 1 and claim 4 characterised in that, after the cessation of the measurement value sequence, a check is made as to whether the following measurement value differs from the reference value by more than the predetermined tolerance value, and in that case an alarm is triggered off.

6. A method according to claims 1 to 5 characterised in that the reference value is re-formed after each triggering of an alarm.

7. A method according to claim 2 characterised in that the digital signals are subject to pulse width modulation.

## Revendications

1. Procédé de surveillance de l'inclinaison d'un véhicule à moteur impliquant la mesure de cette inclinaison au moyen d'un détecteur sensible à l'inclinaison, la production de signaux numériques par le détecteur, le calcul de la moyenne de ces signaux pendant une période prédéfinie pour former une valeur de mesure, la comparaison des valeurs de mesure avec une valeur de référence et le déclenchement d'une alarme lorsque les valeurs de mesure s'écartent de la valeur de référence de plus d'une valeur de tolérance prédéfinie, caractérisé en ce que la moyenne des valeurs de mesure est calculée à maintes reprises sur des valeurs obtenues à des intervalles successifs espacés et la valeur moyenne est stockée à titre de valeur de référence, les valeurs de mesure qui arrivent alors étant comparées pendant une période prédéfinie à cette valeur de référence stockée.

2. Procédé suivant la revendication 1, caractérisé en ce que les signaux numériques variables sont espacés dans le temps d'une manière différente en fonction de l'inclinaison.

3. Procédé suivant la revendication 1, caractérisé en ce que chaque valeur de mesure formée est stockée, chaque valeur de mesure stockée est comparée à la valeur stockée précédemment pour constater le sens d'un écart et les signes des écarts constatés séparés en valeurs positives et négatives sont sommés, les valeurs positives et négatives sommées sont comparées, la différence est établie et une nouvelle valeur de référence n'est alors formée et stockée que lorsque cette différence excède une valeur minimum.

4. Procédé suivant la revendication 1, caractérisé en ce que, lors de l'apparition d'une valeur de mesure dépassant une valeur minimum positive prédéfinie, on vérifie si une valeur de mesure apparaissant dans un intervalle de temps prédéfini dépasse une valeur minimum négative égale et si au moins une autre valeur de mesure se situe entre les deux premières valeurs de mesure, et lorsque cette séquence de valeurs de mesure est établie, on répète la vérification pendant une période prédéfinie et, lors de l'apparition de la même séquence de valeurs de mesure, on supprime le déclenchement d'une alarme.

5. Procédé suivant les revendications 1 et 4, caractérisé en ce qu'après une suppression de la séquence de valeurs de mesure, on vérifie si la valeur de mesure suivante est inférieure de plus de la valeur de tolérance prédéfinie à la valeur de référence et on déclenche dans ce cas une alarme.

6. Procédé suivant les revendications 1 à 5, caractérisé en ce que la valeur de référence est nouvellement formée après chaque déclenchement d'une alarme.

7. Procédé suivant la revendication 2, caractérisé en ce que les signaux numériques sont soumis à une modulation d'impulsions en durée.

**FIG.1**

Meßwert

Referenzwert

Toleranzfenster

**FIG.2**

Meßwert

Schwingungsfenster

Referenzwert

Driftfenster

Toleranzfenster